# EUROPEAN PATENT APPLICATION

(11) **EP 4 610 291 A1**
(43) Date of publication of application: **03.09.2025**
(21) Application number: 23882248.0
(22) Date of filing: 31.08.2023
(51) Int. Cl.: C08G 61/12, C08G 61/06

(54) **COPOLYMER, AND METHOD FOR DECOMPOSING COPOLYMER**

(30) Priority: 24.10.2022 JP 2022170079
(71) Applicant: BRIDGESTONE CORPORATION, Chuo-ku Tokyo 104-8340 (JP)
(72) Inventor: TARDIF Olivier, Tokyo 104-8340 (JP); HAMATANI Satoshi, Tokyo 104-8340 (JP)
(74) Representative: Marks & Clerk LLP
(86) International application number: PCT/JP2023/031999
(87) International publication number: WO 2024/090034

(57) **Abstract**

The problem to be solved by the present disclosure is to provide an easily decomposable polymer and a method for decomposing such a polymer. The solution is a copolymer including an unsaturated hydrocarbon segment (A) and an enol ether segment (B), wherein the content of the enol ether segment (B) is 0.005 to 40 mass% of the content of the unsaturated hydrocarbon segment (A), and a method for decomposing the copolymer, including decomposing the copolymer in the presence of an acid.

## Description

### TECHNICAL FIELD

The present disclosure relates to a copolymer and a method for decomposing a copolymer.

### BACKGROUND

Conventionally, rubber products are difficult to reuse, and after their product life, they are often reused as fuel, particularly in cement factories and the like. However, in recent years, with the growing awareness of environmental issues, studies have been conducted to reuse materials obtained by decomposing used rubber products, instead of burning used rubber products as fuel. For example, as a method for decomposing vulcanized rubber, desulfurization using a solvent can be mentioned (see PTL 1).

### CITATION LIST

### Patent Literature

PTL 1: JP 2000-128901 A

### SUMMARY

### (Technical Problem)

Although vulcanized rubbers can be decomposed by desulfurization using a solvent as described in PTL 1 and other literature, the decomposition conditions inevitably become severe. In contrast, if polymers (rubber components), which are the main components of rubber products, are inherently easily decomposable, it becomes easier to decompose used rubber products and reuse the obtained materials.

Accordingly, an object of the present disclosure is to provide an easily decomposable polymer.

Furthermore, another object of the present disclosure is to provide a method for decomposing such a polymer.

### (Solution to Problem)

The primary features of a copolymer and a method for decomposing a copolymer of the present disclosure, which solve the above problems, are as follows.
[1] A copolymer comprising:
   an unsaturated hydrocarbon segment (A) and an enol ether segment (B),
   wherein a content of the enol ether segment (B) is 0.005 to 40 mass% of a content of the unsaturated hydrocarbon segment (A).
[2] The copolymer according to [1], further comprising a cyclopentane skeleton segment (C).
[3] The copolymer according to [1] or [2], wherein the content of the enol ether segment (B) is 0.005 to 10 mass% of the content of the unsaturated hydrocarbon segment (A).
[4] A method for decomposing a copolymer, comprising decomposing the copolymer according to any one of [1] to [3] in the presence of an acid.

### (Advantageous Effect)

According to the present disclosure, it is possible to provide an easily decomposable polymer.

According to the present disclosure, it is also possible to provide a method for decomposing such a polymer.

### DETAILED DESCRIPTION

A copolymer and a method for decomposing a copolymer according to the present disclosure will be exemplified and described in detail with reference to one embodiment thereof.

### <Definitions>

The compounds described in this specification may be partially or entirely derived from fossil resources, biological resources such as plant resources, or recycled resources such as used tires. Alternatively, they may be derived from a mixture of two or more of fossil resources, biological resources, and recycled resources.

### <Copolymer>

A copolymer of the present embodiment includes an unsaturated hydrocarbon segment (A) and an enol ether segment (B). In the copolymer of the present embodiment, the content of the enol ether segment (B) is 0.005 to 40 mass% of the content of the unsaturated hydrocarbon segment (A).

The copolymer of the present embodiment includes an unsaturated hydrocarbon segment (A), wherein the unsaturated hydrocarbon segment (A) exhibits viscoelastic behavior and imparts elastomeric properties to the copolymer per se and a composition containing the copolymer.

Further, the copolymer of the present embodiment includes an enol ether segment (B), wherein the enol ether segment (B) serves as a decomposition point, enabling the decomposition of the copolymer per se and a composition containing the copolymer.

Furthermore, in the copolymer of the present embodiment, since the content of the enol ether segment (B) is 0.005 mass% or more of the content of the unsaturated hydrocarbon segment (A), the copolymer per se and a composition containing the copolymer are made easily decomposable.

Therefore, the copolymer of the present embodiment is easily decomposable, particularly it is easily decomposable in the presence of acid, as described later.

Additionally, the copolymer of the present embodiment has a content of the enol ether segment (B) of 40 mass% or less of the content of the unsaturated hydrocarbon segment (A), thereby possessing sufficient elastomeric properties and being suitably used in various rubber products such as tires, rubber crawlers, and seismic isolation rubber.

### - Unsaturated Hydrocarbon Segment (A) -

The copolymer of the present embodiment includes an unsaturated hydrocarbon segment (A).

The unsaturated hydrocarbon segment (A) is a segment that has an unsaturated bond in the main chain, and in which the main chain is a hydrocarbon. It should be noted that the unsaturated hydrocarbon segment (A) may have a substituent other than a hydrocarbon group in the side chain. Here, examples of hydrocarbon groups that may be bonded to the side chain include alkyl groups, and examples of substituents other than hydrocarbon groups that may be bonded to the side chain include halogen groups. Examples of the unsaturated bond in the main chain include carbon-carbon double bonds and carbon-carbon triple bonds, among which carbon-carbon double bonds are preferred.

The unsaturated hydrocarbon segment (A) may be a segment (monomer unit) derived from various monomers, and the monomer may be a chain monomer or a cyclic monomer.

In one embodiment, the unsaturated hydrocarbon segment (A) is preferably a segment (monomer unit) derived from a cyclic unsaturated hydrocarbon compound (A1) having 4 to 12 carbon atoms and having one or two carbon-carbon double bonds, as a monomer.

The cyclic unsaturated hydrocarbon compound (A1) is preferably a compound having a 6- to 10-membered ring compound. Additionally, the cyclic unsaturated hydrocarbon compound (A1) preferably has 6 to 10 carbons. Furthermore, the cyclic unsaturated hydrocarbon compound (A1) preferably has two carbon-carbon double bonds. In these cases, the reactivity in the ring-opening polymerization of the cyclic unsaturated hydrocarbon compound (A1) is improved.

Examples of the cyclic unsaturated hydrocarbon compound (A1) include cyclooctadiene compounds represented by the following general formula (1): 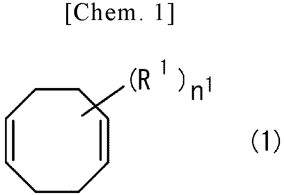 in the formula, R¹ is each independently a halogen atom or an alkyl group, and n¹ is an integer of 0 to 12. Here, examples of the halogen atom include fluorine, chlorine, and bromine. Furthermore, the alkyl group is preferably an alkyl group having 1 to 5 carbon atoms, and examples thereof include a methyl group, an ethyl group, an n-propyl group, and an isopropyl group, for example.

In the general formula (1), R¹ is a substituent on the cyclooctadiene ring and may substitute any hydrogen atom bonded to the cyclooctadiene ring, and n¹ represents the number of substituents R¹.

As the cyclooctadiene compound of the general formula (1), commercially available compounds may be used, or compounds synthesized according to known methods may be used. From the viewpoint of availability and the like, when n¹ is 0 or an integer of 1 to 12, compounds in which R¹ is a halogen atom, methyl group, or ethyl group are preferred, with compounds in which R¹ is a methyl group being more preferred. Specific examples of the cyclooctadiene compound of the general formula (1) include 1,5-cyclooctadiene, 1-chloro-1,5-cyclooctadiene, 1,5-dichloro-1,5-cyclooctadiene, 1-methyl-1,5-cyclooctadiene, and 1,5-dimethyl-1,5-cyclooctadiene.

The cyclic unsaturated hydrocarbon compound (A1) can form the unsaturated hydrocarbon segment (A) by being incorporated into the copolymer through ring-opening polymerization (preferably through ring-opening metathesis polymerization).

Additionally, the cyclooctadiene compound represented by the above general formula (1) can form a butadiene segment by being incorporated into the copolymer through ring-opening metathesis polymerization. Here, the butadiene segment refers to a segment (monomer unit) formed when 1,3-butadiene is incorporated into the polymer via 1,4-linkage, wherein the bonding pattern of the carbon atoms constituting the main chain is represented by -C-C=C-C-, and various substituents may be bonded to the carbon atoms constituting the main chain.

In one embodiment, the unsaturated hydrocarbon segment (A) may be a segment (monomer unit) derived from a chain unsaturated hydrocarbon compound (A2) having 4 to 12 carbons and having one or two carbon-carbon double bonds, as a monomer. Examples of such a chain unsaturated hydrocarbon compound (A2) include 1,3-butadiene, isoprene, 1,3-pentadiene, and 2,3-dimethyl-1,3-butadiene.

The chain unsaturated hydrocarbon compound (A2) can form the unsaturated hydrocarbon segment (A) by being incorporated into the copolymer through addition polymerization.

The ratio of the unsaturated hydrocarbon segment (A) in the copolymer of the present embodiment is preferably in the range of 60 to 99.995 mass%, more preferably in the range of 90 to 99.995 mass%, even more preferably in the range of 95 to 99.995 mass%, and particularly preferably in the range of 97 to 99.995 mass%. When the ratio of the unsaturated hydrocarbon segment (A) in the copolymer is 60 mass% or more, the copolymer exhibits sufficient elastomeric properties and can be suitably used for rubber products.

### - Enol Ether Segment (B) -

The copolymer of the present embodiment has an enol ether segment (B).

The enol ether segment (B) is a segment having an enol ether moiety (-C=C-O-) in the main chain. The enol ether moiety is easily hydrolyzed by acids or the like, and when the copolymer has an enol ether moiety in the main chain, the main chain of the copolymer becomes more prone to cleavage, making it more easily decomposable.

The enol ether segment (B) may be a segment (monomer unit) derived from various monomers, and the monomer may be a chain monomer or a cyclic monomer.

In one embodiment, the enol ether segment (B) is preferably a segment (monomer unit) derived from an unsaturated heterocyclic compound (B1) that contains oxygen in the main chain of the ring and has one or two carbon-carbon double bonds, as a monomer. Here, "containing oxygen in the main chain of the ring" means that one or more of the constituent atoms (members) of the ring are oxygen. Examples of such an unsaturated heterocyclic compound (B1) include dihydrofuran compounds (cyclic enol ether compounds) represented by the following general formula (2): 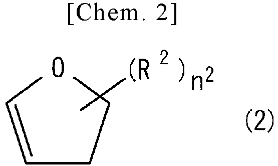 in the formula, R² is each independently a halogen atom or an alkyl group, and n² is an integer of 0 to 6. Here, examples of the halogen atom include fluorine, chlorine, and bromine. Furthermore, the alkyl group is preferably an alkyl group having 1 to 5 carbon atoms, and examples thereof include a methyl group, an ethyl group, an n-propyl group, and an isopropyl group, for example.

In the general formula (2), R² is a substituent on the dihydrofuran ring and may substitute any hydrogen atom bonded to the dihydrofuran ring, and n² represents the number of substituent R².

As the dihydrofuran compound of the general formula (2), commercially available compounds may be used, or compounds synthesized according to known methods may be used. From the viewpoint of availability and the like, when n² is 0 or n² is an integer from 1 to 6, a compound in which R² is a halogen atom, a methyl group, or an ethyl group is preferred, and a compound in which R² is a methyl group is more preferred. Examples of the dihydrofuran compound of the general formula (2) include 2,3-dihydrofuran and 5-methyl-2,3-dihydrofuran.

The unsaturated heterocyclic compound (B1) can form the enol ether segment (B) by being incorporated into the copolymer through ring-opening polymerization (preferably ring-opening metathesis polymerization).

The content of the enol ether segment (B) is 0.005 to 40 mass%, preferably 0.005 to 10 mass%, more preferably 0.005 to 5 mass%, and even more preferably 0.005 to 3 mass%, of the content of the unsaturated hydrocarbon segment (A). When the content of the enol ether segment (B) is 0.005 mass% or more of the content of the unsaturated hydrocarbon segment (A), the copolymer per se and a composition containing the copolymer become more easily decomposable. Further, when the content of the enol ether segment (B) is 40 mass% or less of the content of the unsaturated hydrocarbon segment (A), the copolymer exhibits sufficient elastomeric properties and can be suitably used for rubber products. Additionally, when the content of the enol ether segment (B) is 0.005 to 10 mass% of the content of the unsaturated hydrocarbon segment (A), the ease of decomposition of the copolymer and the elastomeric properties of the copolymer can be balanced at a high level.

The ratio of the enol ether segment (B) in the copolymer of the present embodiment is preferably in the range of 0.005 to 40 mass%, more preferably in the range of 0.005 to 10 mass%, even more preferably in the range of 0.005 to 5 mass%, and particularly preferably in the range of 0.005 to 3 mass%. When the ratio of the enol ether segment (B) in the copolymer is 0.005 mass% or more, the copolymer per se and a composition containing the copolymer become easily decomposable. Furthermore, when the ratio of the enol ether segment (B) in the copolymer is 40 mass% or less, the copolymer exhibits sufficient elastomeric properties and can be suitably used for rubber products.

### - Cyclopentane Skeleton Segment (C) -

The copolymer of the present embodiment preferably further includes a cyclopentane skeleton segment (C). A copolymer having a cyclopentane skeleton segment (C) is easy to synthesize.

The cyclopentane skeleton segment (C) is a segment that includes a cyclopentane ring in the main chain. Various substituents may be bonded to the cyclopentane ring, and examples of such substituents include halogen groups, alkyl groups, and alkylidene groups.

The cyclopentane skeleton segment (C) may be a segment (monomer unit) derived from various monomers. In one embodiment, the cyclopentane skeleton segment (C) is preferably a segment (monomer unit) derived from a compound (C1) having a norbornene skeleton as a monomer. Examples of such a compound (C1) having a norbornene skeleton include norbornene compounds represented by the following general formula (3): 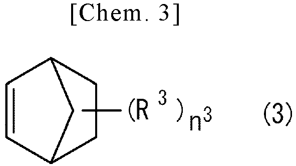 in the formula, R³ is each independently a halogen atom, an alkyl group, or an alkenyl group, two R³ groups bonded to the same carbon atom may together form an alkylidene group, and n³ is an integer from 0 to 10. Here, examples of the halogen atom include fluorine, chlorine, and bromine. Furthermore, the alkyl group is preferably an alkyl group having 1 to 5 carbon atoms, and examples thereof include a methyl group, an ethyl group, an n-propyl group, and an isopropyl group, for example. Additionally, the alkenyl group is preferably an alkenyl group having 2 to 5 carbon atoms, and examples thereof include a vinyl group and an allyl group, for example. Moreover, examples of the alkylidene group formed by two R³ groups bonded to the same carbon atom include a methylidene group (=CH₂) and an ethylidene group (=CH-CH₃).

In the general formula (3), R³ is a substituent on the norbornene ring and may substitute any hydrogen atom bonded to the norbornene ring, and n³ represents the number of substituent R³.

As the norbornene compound of the general formula (3), commercially available compounds may be used, or compounds synthesized according to known methods may be used. From the viewpoint of availability and the like, when n³ is 0 or n³ is an integer from 1 to 10, compounds where R³ is a halogen atom, a methyl group, or an ethyl group, or compounds in which two R³ groups bound to the same carbon atom form an ethylidene group, are preferred. Examples of norbornene compounds of the general formula (3) include norbornene, 5-methyl-2-norbornene, 5-vinyl-2-norbornene, and 5-ethylidene-2-norbornene.

The compound (C1) having the norbornene skeleton can form the cyclopentane skeleton segment (C) by being incorporated into a copolymer through ring-opening polymerization (preferably through ring-opening metathesis polymerization).

When the copolymer of the present embodiment has a cyclopentane skeleton segment (C), the content of the cyclopentane skeleton segment (C) is preferably 0.005 to 40 mass%, more preferably 0.005 to 10 mass%, even more preferably 0.005 to 5 mass%, and particularly preferably 0.005 to 3 mass% of the content of the unsaturated hydrocarbon segment (A). A copolymer having a cyclopentane skeleton segment (C) with a content of 0.005 mass% or more of the content of the unsaturated hydrocarbon segment (A) is easy to synthesize. Additionally, when the content of the cyclopentane skeleton segment (C) is 40 mass% or less of the content of the unsaturated hydrocarbon segment (A), the copolymer has sufficient elastomeric properties and can be suitably used in rubber products. Moreover, when the content of the cyclopentane skeleton segment (C) is 0.005 to 10 mass% of the content of unsaturated hydrocarbon segment (A), the ease of synthesis of the copolymer and the elastomeric properties of the copolymer can be balanced at a high level.

When the copolymer of the present embodiment has a cyclopentane skeleton segment (C), the ratio of the cyclopentane skeleton segment (C) in the copolymer is preferably in the range of 0.005 to 40 mass%, more preferably in the range of 0.005 to 10 mass%, even more preferably in the range of 0.005 to 5 mass%, and particularly preferably in the range of 0.005 to 3 mass%. A copolymer with a ratio of the cyclopentane skeleton segment (C) of 0.005 mass% or more is easy to synthesize. Moreover, when the ratio of the cyclopentane skeleton segment (C) is 40 mass% or less in the copolymer, the copolymer has sufficient elastomeric properties and can be suitably used in rubber products.

### - Other Segments (D) -

The copolymer of the present embodiment may further contain other segments (D).

When the copolymer of the present embodiment contains other segments (D), the ratio of the other segments (D) in the copolymer is preferably in the range of 0.005 to 40 mass%, more preferably in the range of 0.005 to 10 mass%, even more preferably in the range of 0.005 to 5 mass%, and particularly preferably in the range of 0.005 to 3 mass%.

The ratios of the unsaturated hydrocarbon segment (A), the enol ether segment (B), the cyclopentane skeleton segment (C), and the other segments (D) in the copolymer of the present embodiment can be calculated from (1) the integral ratios of the peaks in the ¹H-NMR spectrum, and (2) the amounts of each monomer used in the production of the copolymer and the unreacted amounts of each monomer. From the calculated ratios, the mass ratios of each content can be derived.

### - Molecular Weights of Copolymer

The copolymer of the present embodiment preferably has a number average molecular weight (Mn) of 10,000 to 2,000,000, and more preferably 20,000 to 1,000,000. When the number average molecular weight (Mn) is 10,000 or more, the copolymer can be suitably used in various rubber products such as tires, rubber crawlers, and seismic isolation rubber, and when the number average molecular weight (Mn) is 2,000,000 or less, it is easy to be kneaded with various compounding agents for rubber products.

The copolymer of the present embodiment preferably has a weight average molecular weight (Mw) of 20,000 to 4,000,000, and more preferably 40,000 to 2,000,000. When the weight average molecular weight (Mw) is 20,000 or more, the copolymer can be suitably used for various rubber products such as tires, rubber crawlers, and seismic isolation rubber, and when the weight average molecular weight (Mw) is 4,000,000 or less, it is easy to kneaded with various compounding agents for rubber products.

In this specification, the number average molecular weight (Mn) and the weight average molecular weight (Mw) of the copolymer is determined by gel permeation chromatography (GPC) using polystyrene as a standard substance.

### - Method for Manufacturing Copolymer -

The copolymer of the present embodiment can be manufactured, but is not particularly limited to, by ring-opening polymerization of a cyclic unsaturated hydrocarbon compound (A1) having 4 to 12 carbons and having one or two carbon-carbon double bonds, and a cyclic unsaturated heterocyclic compound (B1) containing oxygen in the main chain of the ring and having one or two carbon-carbon double bonds, as monomers. For example, the copolymer of the present embodiment may be formed by ring-opening polymerization (preferably by ring-opening metathesis polymerization) of a cyclooctadiene compound represented by the above general formula (1) and a dihydrofuran compound represented by the above general formula (2). As one example, the reaction scheme of the ring-opening metathesis polymerization in which 1,5-cyclooctadiene is used as a compound represented by the general formula (1) and 2,3-dihydrofuran is used as a compound represented by the general formula (2) is described below.

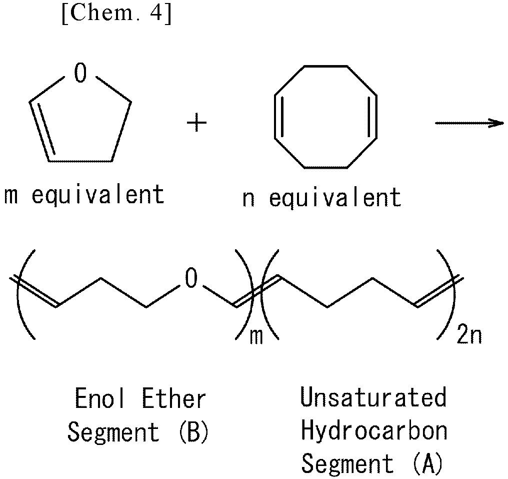

Furthermore, when the copolymer of the present embodiment has a cyclopentane skeleton segment (C), it can be manufactured, but is not particularly limited to, by ring-opening polymerization of a cyclic unsaturated hydrocarbon compound (A1) having 4 to 12 carbons and having one or two carbon-carbon double bonds, a cyclic unsaturated heterocyclic compound (B1) containing oxygen in the main chain of the ring and having one or two carbon-carbon double bonds, and a compound (C1) having a norbornene skeleton, as monomers. For example, when the copolymer has a cyclopentane skeleton segment (C), it may be formed by ring-opening polymerization (preferably by ring-opening metathesis polymerization) of a cyclooctadiene compound represented by the above general formula (1), a dihydrofuran compound represented by the above general formula (2), and a norbornene compound represented by the above general formula (3). As one example, the reaction scheme of the ring-opening metathesis polymerization in which 1,5-cyclooctadiene is used as the compound represented by the general formula (1), 2,3-dihydrofuran is used as the compound represented by the general formula (2), and 5-ethylidene-2-norbornene is used as the compound represented by the general formula (3) is described below.

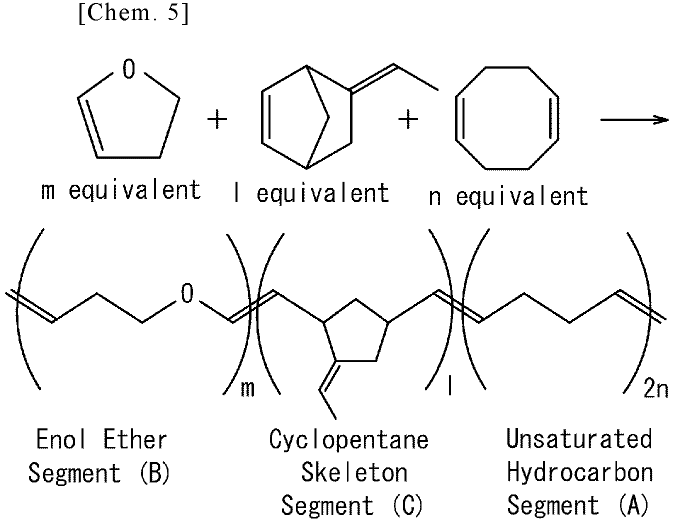

In the above ring-opening polymerization, known catalysts can be used.

Also in the above-described ring-opening metathesis polymerization, known catalysts can be used, for example, transition metal complexes such as titanium complexes, zirconium complexes, molybdenum complexes, ruthenium complexes, tantalum complexes, tungsten complexes, and rhenium complexes can be used. Of these, transition metal-carbene complexes, such as Grubbs first generation catalyst, Grubbs second generation catalyst, and Hoveyda-Grubbs catalyst are preferred. It should be noted that Grubbs second generation catalyst is represented by the following structural formula: 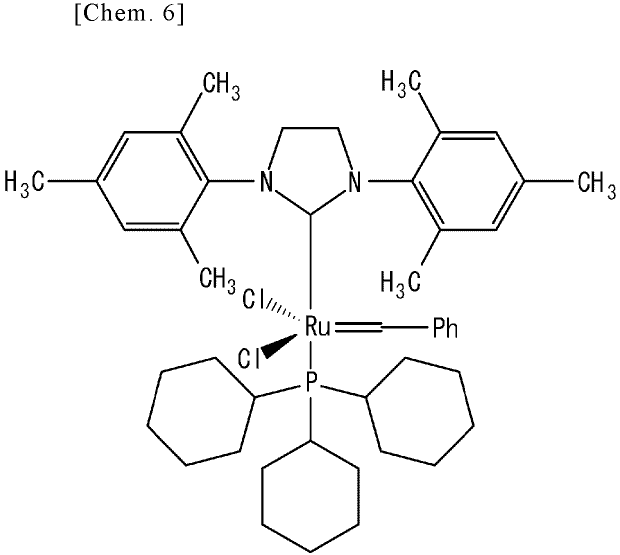 and a commercially available product can be used.

The amount of the catalyst used is preferably, for example, 0.00001 to 0.1 mol, more preferably 0.0001 to 0.01 mol, and particularly preferably 0.0001 to 0.001 mol, per 1 mol of the raw material monomer.

In the above ring-opening polymerization, the reaction temperature is preferably -50°C to 200°C, and more preferably 0°C to 200°C. The reaction time is preferably 1 to 24 hours, and more preferably 1 to 6 hours. The reaction pressure may be pressurized, reduced pressure, or atmospheric pressure, but atmospheric pressure is preferred. The reaction atmosphere is preferably an inert gas atmosphere such as nitrogen or argon. The ring-opening polymerization may be carried out in a batch process or a continuous process.

The above-mentioned ring-opening polymerization may be carried out in a solvent. For example, inert solvents for the reaction are preferred as the solvent, such as aliphatic halogenated solvents, e.g., dichloromethane, chloroform, and 1,2-dichloroethane; ether-based solvents, e.g., diethyl ether, tetrahydrofuran, and dioxane; aromatic hydrocarbon solvents, e.g., benzene, toluene, xylene, and mesitylene, aromatic halogenated solvents, e.g., monochlorobenzene and dichlorobenzene, and aliphatic hydrocarbon solvents, e.g., hexane, heptane, octane, and cyclohexane.

### - Applications of Copolymer -

The copolymer of the present embodiment can be used in various rubber products. For example, rubber products include tires, rubber crawlers, and seismic isolation rubber.

In cases of the use in these rubber products, the copolymer may be mixed with various compounding agents according to the desired performance, to thereby form a rubber composition. Additionally, if desired, the copolymer may be blended with other rubber components.

Examples of the other rubber components include natural rubber (NR), synthetic diene-based rubber, and non-diene-based rubber. Examples of the synthetic diene-based rubber include synthetic isoprene rubber (IR), styrene-butadiene rubber (SBR), butadiene rubber (BR), styrene-isoprene rubber (SIR), chloroprene rubber (CR), ethylene-butadiene copolymer, and ethylene-styrene-butadiene copolymer. Examples of the non-diene-based rubber include silicone rubber, fluoro rubber, and urethane rubber.

Examples of the compounding agents include fillers (such as carbon black and silica), softeners, wax, stearic acid, antioxidants, silane coupling agents, zinc white (zinc oxide), and vulcanization accelerators.

As described above, since the copolymer of the present embodiment is easily decomposable, the rubber composition containing the copolymer of the present embodiment, together with the other rubber components and compounding agents, is also easily decomposable. Furthermore, rubber products manufactured from such rubber compositions are easy to decompose and recycle after use.

### <Method for Decomposing Copolymer>

A method for decomposing the copolymer of the present embodiment includes decomposing the copolymer of the present embodiment in the presence of an acid. The copolymer of the present embodiment described above is easily decomposable and, in particular, easily hydrolyzed in the presence of an acid. Therefore, according to the method for decomposing the copolymer of the present embodiment, the copolymer can be easily decomposed.

The materials obtained by the method for decomposing the copolymer of the present embodiment can be reused for various applications. For example, they can be used as raw materials for the production of copolymers or as raw materials for synthesizing other chemical substances.

The acid may be either an inorganic acid or an organic acid. Examples of the inorganic acid include hydrochloric acid, sulfuric acid, and nitric acid. Examples of the organic acid include formic acid, acetic acid, and propionic acid. Among these, hydrochloric acid is preferred as the acid. When hydrochloric acid is used as the acid, the copolymer is easily decomposable, and wastewater is also easily treated.

The decomposition temperature in the presence of the acid is not particularly limited, but a range of 0°C to 100°C is preferred, and a temperature near room temperature, such as 15°C to 30°C, may also be used. Additionally, the decomposition time in the presence of the acid is not particularly limited and can be appropriately selected depending on the above-mentioned decomposition temperature and various properties of the copolymer. However, a range of 1 to 24 hours is preferred, and 1 to 6 hours is more preferred. Furthermore, the reaction pressure during decomposition may be pressurized, reduced pressure, or atmospheric pressure, but atmospheric pressure is preferred. The reaction atmosphere is not particularly limited and may be in the presence of air or under an inert gas atmosphere such as nitrogen or argon.

The decomposition in the presence of the acid is preferably carried out in a solvent. The solvent to be used is preferably one in which the acid used dissolves easily, such as water or alcohol, for example. Among these, water is preferred as the solvent. Water has excellent solubility for acids, and wastewater is also easily treated.

### EXAMPLES

The present disclosure will be described in more detail with reference to the following examples, but the present disclosure is not limited to the examples below.

### <Analysis Method for Polymer>

### (1) Analysis Method for Ratio of Each Segment in Polymer

The ratios of the segments derived from 1,5-cyclooctadiene, 2,3-dihydrofuran, and 5-ethylidene-2-norbornene in the polymer were determined based on the integral ratios of each peak in the ¹H-NMR (room temperature, in CDCl₃ solvent) spectrum.

The calculation was carried out as follows.

The integral value of the peak at 5.8 to 6.4 ppm was defined as I₁ (derived from the hydrogen at position "a" in the structural formula below),
the integral value of the peak at 5.0 to 5.7 ppm was defined as I₂ (derived from the hydrogens at positions "b," "c," and "d" in the structural formula below), and
the integral value of the peak at 2.4 to 2.6 ppm was defined as I₃ (derived from the hydrogen at position "e" in the structural formula below).

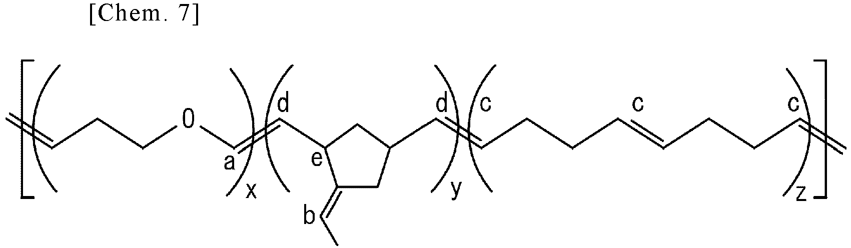

Then, the following calculations were performed: x = I₁ / 1, y = I₃ / 1, and z = (I₂ - (3y)) / 4. Using the obtained values of x, y, and z, the contents of the segments were determined as follows. Content of the segments derived from 2,3-dihydrofuran (mol%) = x/ (x + y + z) Content of the segments derived from 5-ethylidene-2-norbornene (mol%) = y/(x + y + z) Content of the segments derived from 1,5-cyclooctadiene (mol%) = z /(x + y + z)

Additionally, the ratios (mass%) of the segments derived from 2,3-dihydrofuran, 5-ethylidene-2-norbornene, and 1,5-cyclooctadiene were determined by converting the corresponding values in "mol%" to those in "mass%."

The measurement was not performed for the polymer in Example 1. However, the polymer in Example 1 is considered to have the same composition as the polymer in Example 4 based on the amounts of raw materials used and the yield.

### (2) Analysis Method for Molecular Weight of Polymer

The number average molecular weight (Mn), weight average molecular weight (Mw), peak-top molecular weight (Mp), and molecular weight distribution (Mw/Mn) of the polymer were determined in terms of polystyrene was determined by gel permeation chromatography [GPC: HLC-8321GPC/HT manufactured by Tosoh Corporation, columns: two HT-806M columns manufactured by Showa Denko K. K., detector: differential refractometer (RI)], using monodisperse polystyrene as the standard. Note that the measurement temperature was 40°C.

### <Method of Synthesizing Copolymer>

### (Example 1)

In a glass vessel substituted with nitrogen, 11.20 g (103.5 mmol) of 1,5-cyclooctadiene, 0.06 g (0.86 mmol) of 2,3-dihydrofuran, and 0.60 g (4.99 mmol) of 5-ethylidene-2-norbornene were added. After the vessel was sealed and purged with nitrogen for 5 minutes, 40 g of dehydrated tetrahydrofuran was added.

Next, 2 mL of a 0.00718 M toluene solution of a Ru catalyst (Grubbs second generation catalyst) was added to the vessel. The polymerization reaction was carried out at room temperature for 180 minutes.

Then, an excess amount of ethyl vinyl ether was added to the vessel and stirred for 30 minutes to quench the reaction. Thereafter, the contents in the vessel were poured into a large amount of isopropanol solution containing BHT (2,6-di-tert-butyl-4-methylphenol) to precipitate the polymer. The polymer was filtered and dried under reduced pressure at 60°C for 5 hours, yielding 10.4 g of polymer.

### (Examples 2 to 5 and Comparative Examples 1 to 2)

Polymers were obtained in a manner similar to Example 1 by setting the amount of 2,3-dihydrofuran used, the amount of 5-ethylidene-2-norbornene used, the molar concentration of the toluene solution of Ru catalyst, the amount of the toluene solution of Ru catalyst used, and the polymerization time to the conditions summarized in Table 1. The amount and the yield of the obtained polymers are summarized in Table 1.

### <Method for Decomposing Copolymer>

A solution was prepared by dissolving 10 mg of the polymer in 5 mL of dehydrated tetrahydrofuran (THF). Two drops of 1 N HCl solution were added to this solution, and the decomposition reaction was carried out at room temperature for the reaction time summarized in Table 1. The molecular weight before and after the decomposition reaction was analyzed using GPC to determine the degree of the reduction of the molecular weight. The results are summarized in Table 1.

**[Table 1]**

| | | | Example 1 | Example 2 | Example 3 | Example 4 | Example 5 | Comparative Example 1 | Comparative Example 2 |
|---|---|---|---|---|---|---|---|---|---|
| | Amount of 1,5-cyclooctadiene used | g | 11.2 | 11.2 | 11.2 | 11.2 | 11.2 | 11.2 | 11.2 |
| | Amount of 2,3-dihydrofuran used | g | 0.06 | 0.06 | 0.06 | 0.06 | 0.6 | 0 | 0 |
| | Amount of 5-ethylidene-2-norbornene used | g | 0.6 | 0.3 | 0.1 | 0.6 | 6 | 0 | 0.6 |
| Polymerization conditions | Amount of tetrahydrofuran used | g | 40 | 40 | 40 | 40 | 40 | 40 | 40 |
| | Molar concentration of toluene solution of Ru catalyst | M | 0.00718 | 0.014 | 0.014 | 0.014 | 0.014 | 0.014 | 0.014 |
| | Amount of toluene solution of Ru catalyst used | mL | 2 | 1 | 1 | 1 | 1 | 1 | 1 |
| | Polymerization time | minutes | 180 | 180 | 180 | 150 | 150 | 150 | 150 |
| | Amount of product | g | 10.4 | 9.1 | 3.5 | 10.56 | 15.13 | 9.33 | 10 |
| | Yield of product | % | 88 | 79 | 31 | 89 | 85 | 83 | 85 |
| Composition of resulting polymer | Ratio of segment derived from 1,5-cyclooctadiene | mass% | - | 97.0 | 97.4 | 93.9 | 66.3 | 100.0 | 94.0 |
| | Ratio of segment derived from 2,3-dihydrofuran | mass% | - | 0.7 | 1.0 | 0.5 | 3.4 | 0.0 | 0.0 |
| | Ratio of segment derived from 5-ethylidene-2-norbornene | mass% | - | 2.3 | 1.6 | 5.7 | 30.3 | 0.0 | 6.0 |
| Physical properties of resulting polymer | Number average molecular weight (Mn) | ×10³ | 131,465 | 198,428 | 221,384 | 143,576 | 82,341 | 124,168 | 115,537 |
| | Weight average molecular weight (Mw) | ×10³ | 278,686 | 461,325 | 447,011 | 305,787 | 214,799 | 258,719 | 270,146 |
| | Peak top molecular weight (Mp) | ×10³ | 187,657 | 416,039 | 410,076 | 264,493 | 158,669 | 236,820 | 215,020 |
| | Molecular weight distribution (Mw/Mn) | - | 2.12 | 2.33 | 2.10 | 2.13 | 2.61 | 2.08 | 2.34 |
| Decomposition conditions | Decomposition time | hours | 20 | 2 | 2 | 4 | 4 | 4 | 4 |
| Physical properties of polymer after decomposition | Number average molecular weight (Mn) | ×10³ | 21,273 | 64,992 | 37,037 | 44,174 | 3,621 | 114,514 | 111,942 |
| | Weight average molecular weight (Mw) | ×10³ | 42,762 | 132,241 | 90,816 | 94,328 | 7,962 | 250,522 | 253,407 |
| | Peak top molecular weight (Mp) | ×10³ | 39,720 | 122,512 | 90,408 | 90,361 | 7,103 | 233,574 | 206,305 |
| | Molecular weight distribution (Mw/Mn) | - | 2.0 | 2.0 | 2.5 | 2.1 | 2.2 | 2.2 | 2.3 |

It is understood from Table 1 that the copolymers of the examples according to the present disclosure underwent decomposition in the presence of the acid, and their molecular weights were significantly reduced.

On the other hand, it is understood from the results of Comparative Examples 1 and 2 that (co)polymers without enol ether segments (B) did not undergo a reduction in molecular weight and were difficult to decompose even when treated in the presence of the acid.

### INDUSTRIAL APPLICABILITY

The copolymer of the present disclosure can be used in various rubber products, such as tires, rubber crawlers, and seismic isolation rubber.

## Claims

1. A copolymer comprising:
an unsaturated hydrocarbon segment (A) and an enol ether segment (B),
wherein a content of the enol ether segment (B) is 0.005 to 40 mass% of a content of the unsaturated hydrocarbon segment (A).

2. The copolymer according to claim 1, further comprising a cyclopentane skeleton segment (C).

3. The copolymer according to claim 1, wherein the content of the enol ether segment (B) is 0.005 to 10 mass% of the content of the unsaturated hydrocarbon segment (A).

4. A method for decomposing a copolymer, comprising decomposing the copolymer according to any one of claims 1 to 3 in the presence of an acid.
